# EUROPEAN PATENT APPLICATION

(11) **EP 3 098 632 A1**
(43) Date of publication of application: **30.11.2016**
(21) Application number: 14879830.9
(22) Date of filing: 18.06.2014
(51) Int. Cl.: G02B 6/38

(54) **METHOD FOR OPTICAL SPLITTER WORK, AND MANAGEMENT TERMINAL**

(30) Priority: 21.01.2014 CN 201410026219
(71) Applicant: ZTE Corporation, Shenzhen, Guangdong 518057 (CN)
(72) Inventor: ZHANG, Jian, Shenzhen Guangdong 518057 (CN); LI, Weidong, Shenzhen Guangdong 518057 (CN); LIU, Yun, Shenzhen Guangdong 518057 (CN)
(74) Representative: Carangelo, Pierluigi
(86) International application number: PCT/CN2014/080262
(87) International publication number: WO 2015/109740

(57) **Abstract**

The present disclosure discloses a method for constructing an optical splitter and a management terminal. The method includes that: a management terminal connected with a device sends a first instruction to a guide port of the device, wherein the first instruction is used for instructing to turn on a light of the guide port of the device; the guide port is determined according to the light of the guide port, and an optical splitter to be constructed is determined according to an optical splitter tail fiber plugged into the guide port; the management terminal sends a second instruction to a port to be constructed of the device, wherein the second instruction is used for instructing to turn on a light of the port to be constructed of the device; and a tail fiber of the optical splitter to be constructed is plugged into the port to be constructed according to the light of the port to be constructed. According to the present disclosure, the problem that a constructor cannot rapidly determine an optical splitter for construction in a process of constructing multiple optical splitters in the related art is solved, rapid identification and installation of the optical splitters is implemented and a construction speed is increased.

## Description

### Technical Field

The present disclosure relates to the field of communication, and in particular to a method for constructing an optical splitter and a management terminal.

### Background

Currently, a technology for opening an optical fiber service is a technology essential for an optical fiber network, and a work order of an optical splitter is a common work order in service opening.

An intelligent Optical Distribution Network (ODN) is a huge ODN between an Optical Line Terminal (OLT) and an Optical Network Unit (ONU), and there are mainly three types of devices in the intelligent ODN: an intelligent Optical Distribution Frame (ODF), an intelligent Optical Cable Connector (OCC) and an intelligent Optical Distribution Box (ODB).

During rapid development and construction of a current Fiber To The Home (FTTH) optical network, optical signals bearing data information are usually required to be collected and optically distributed by an optical splitter on an intelligent ODF and an intelligent OCC. A work order created for construction of the optical splitter is called an optical splitter work order. An optical splitter is an optical device for collecting and distributing optical signals bearing data information, and there are at least one input-port optical interface and at least two output-port optical interfaces on the optical splitter. Such a characteristic determines that an optical splitter may be constructed for many times, and moreover, there may be multiple optical splitters on one device, which causes the problem of how to determine the optical splitter for construction at a construction site. Since different optical splitters have different uplink interfaces used for collecting data, using a wrong optical splitter may cause a failure of opening a service.

In a related art, there are two technical solutions for solving the problem.

The first technical solution is a conventional paper label method. A resource system manages optical splitters in a unified manner and allocates a unique Identifier (ID) for each optical splitter, and the unique ID of the optical splitter is adhered to the optical splitter in a paper label form. A constructor determines an optical splitter to be constructed according to the paper label adhered to the optical splitter after reaching a construction site.

Defect: the paper label is easy to be damaged. In the present era of rapid development of optical fiber network, an environmental condition, particularly for an intelligent OCC device installed on a roadside, is very severe and the paper label is easy to be damaged, which usually disables the constructor to determine the optical splitters to be constructed, thereby further affecting correct construction of a work order.

The second technical solution is that a management terminal traverse and reads the IDs of the optical splitters at the construction site through. An optical splitter work order includes the IDs of the optical splitters to be constructed, and at the construction site, the management terminal is connected with an optical splitter to read the ID of the optical splitter, wherein the ID of the optical splitter is stored in an electronic tag on the tail fiber tip of the optical splitter, and the management terminal traverse and read the IDs of all optical splitters one by one until the optical splitter to be constructed in the work order is found.

Defect: traversing and reading the IDs of all optical splitter may cause influence on a construction speed. More manual interventions may cause a high error rate. For the problem that a constructor may not rapidly determine an optical splitter to be constructed in a process of constructing multiple optical splitters in the related art, there is yet no effective solution.

### Summary

The embodiment of the present disclosure provides an optical splitter construction method and a management terminal, so as to at least solve the problem that a constructor may not rapidly determine an optical splitter for construction in a process of constructing multiple optical splitters in the related technology.

According to one aspect of the embodiment of the present disclosure, a method for constructing an optical splitter is provided, including: sending, by a management terminal connected with a device, a first instruction to a guide port of the device, wherein the first instruction is used for instructing to turn on a light of the guide port of the device; determining the guide port according to the light of the guide port, and determining an optical splitter to be constructed according to an optical splitter tail fiber plugged into the guide port; sending, by the management terminal, a second instruction to a port to be constructed of the device, wherein the second instruction is used for instructing to turn on a light of the port to be constructed of the device; and plugging a tail fiber of the optical splitter to be constructed into the port to be constructed according to the light of the port to be constructed.

In an example embodiment, sending, by the management terminal, the first instruction to the guide port of the device comprises: sending, by the management terminal, the first instruction to the guide port of the device according to a guide port indicated in optical splitter work order information, wherein the guide port indicated in the optical splitter work order information is determined by a network management system; and sending, by the management terminal, the first instruction to the guide port of the device according to a calculated guide port, wherein the calculated guide port is determined by the device or the management terminal according to an Identifier (ID) of the optical splitter to be constructed, the ID is carried in an optical splitter work order.

In an example embodiment, the guide port is determined according to a principle as follows: a device port into which an optical splitter input port with a smaller serial number is plugged is preferably selected as the guide port, and then a device port into which an optical splitter output port with a smaller serial number is plugged is selected.

In an example embodiment, the method further including: judging, by the management terminal, whether an ID of the optical splitter plugged into the guide port and an ID of the optical splitter plugged into the port to be constructed are consistent or not, determining that a construction result is correct when a judgment result is that the ID of the optical splitter plugged into the guide port and the ID of the optical splitter plugged into the port to be constructed are consistent, and determining that a wrong optical splitter is used when the judgment result is that the ID of the optical splitter plugged into the guide port and the ID of the optical splitter plugged into the port to be constructed are not consistent.

In an example embodiment, before sending, by the management terminal, the first instruction to the guide port of the device, further including: checking, by the management terminal, a resource configuration condition of the device.

According to another aspect of the present disclosure, a management terminal is provided, including: a first sending component, configured to send a first instruction to a guide port of a device connected with the management terminal, wherein the first instruction is used for instructing to turn on a light of the guide port of the device; and a second sending component, configured to send a second instruction to a port to be constructed of the device, wherein the second instruction is used for instructing to turn on a light of the port to be constructed of the device.

In an example embodiment, the management terminal further including: a receiving component, configured to receive optical splitter work order information from a network management system, or receive the guide port determined by the device according to an Identifier (ID) of an optical splitter to be constructed in an optical splitter work order, wherein the first sending component is configured to send the first instruction to the guide port of the device according to a guide port carried in the optical splitter work order information or the guide port determined by the device.

In an example embodiment, the management terminal further including: a determining component, configured to determine the guide port according to an ID of the optical splitter to be constructed in an optical splitter work order, wherein the first sending component is configured to send the first instruction to the guide port of the device according to the guide port determined by the determining component.

In an example embodiment, the guide port is determined according to a principle as follows: a device port into which an optical splitter input port with a smaller serial number is plugged is preferably selected as the guide port, and then a device port into which an optical splitter output port with a smaller serial number is plugged is selected.

In an example embodiment, the management terminal further including: a judging component, configured to judge whether an ID of the optical splitter plugged into the guide port and an ID of the optical splitter plugged into the port to be constructed are consistent or not, determine that a construction result is correct when a judgment result is that the ID of the optical splitter plugged into the guide port and the ID of the optical splitter plugged into the port to be constructed are consistent, and determining that a wrong optical splitter is used when the judgment result is that the ID of the optical splitter plugged into the guide port and the ID of the optical splitter plugged into the port to be constructed are not consistent.

In an example embodiment, the management terminal further including: a checking component, configured to check a resource configuration condition of the device.

According to the embodiment of the present disclosure, a management terminal connected with a device sends a the first instruction to a guide port of the device, wherein the first instruction is used for instructing to turn on a light of the guide port of the device; the guide port is determined according to the light of the guide port, and the optical splitter to be constructed is determined according to the optical splitter tail fiber plugged into the guide port; the management terminal sends a second instruction to the port to be constructed of the device, wherein the second instruction is used for instructing to turn on a light of the port to be constructed of the device, and the tail fiber of the optical splitter to be constructed is plugged into the port to be constructed according to the light of the port to be constructed, so that the problem that the constructor cannot rapidly determine the optical splitter for construction in the process of constructing the multiple optical splitters in the related art is solved, rapid identification and mounting of the optical splitters is implemented and a construction speed is increased.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a method for constructing an optical splitter according to an embodiment of the present disclosure;
Fig. 2 is a first structure block diagram of a management terminal according to an embodiment of the present disclosure;
Fig. 3 is a second structure block diagram of a management terminal according to an embodiment of the present disclosure;
Fig. 4 is a third structure block diagram of a management terminal according to an embodiment of the present disclosure;
Fig. 5 is a fourth structure block diagram of a management terminal according to an embodiment of the present disclosure;
Fig. 6 is a flowchart of a method for intelligently guiding construction of an optical splitter work order according to an example embodiment of the present disclosure;
Fig. 7 is a flowchart of guide port calculation of a network management system according to an example embodiment of the present disclosure;
Fig. 8 is a flowchart of guide port calculation of a device to be constructed according to an example embodiment of the present disclosure; and
Fig. 9 is a flowchart of guide port calculation of a management terminal according to an example embodiment of the present disclosure.

### Detailed Description of the Embodiments

It is important to note that embodiments in the present disclosure and characteristics in the embodiments may be combined under the condition of no conflicts. The present disclosure will be described below with reference to the drawings and the embodiments in detail.

Technical terms involved in the embodiment will be described below.

Network device management system for managing an intelligent ODN: a subsystem of an Element Management System (EMS), focusing on intelligent management over an ODN device, implementing accurate positioning of the optical network device on the basis of a Geographic Information System (GIS) and an R intelligent identification system and called a network management system for short in the present disclosure.

Optical network device: a basic device in the ODN and called a device for short.

Management terminal: may including a displaying component and a processing component, wherein the displaying component provides a function of displaying detailed information of a work order; and the processing component is required to be connected to the device, and provides functions of guiding construction, checking device resources and feeding back a result of constructing the service work order to the network management system. A constructor carries the management terminal.

Work order: a full name of the work order is a construction work order created for opening a certain optical communication service. The construction work order is distributed to the constructor for the constructor to implement construction according to the work order, and is called a work order for short in the Specification. The work order may be sent to the network management system through a northbound interface by a work order system, and may also be directly planned and created on the network management system. There is no distinct difference between the two manners for the present disclosure, and the present disclosure is described with creation of the work order on the network management system.

Optical splitter work order: a work order for construction with an optical splitter.

Optical splitter: a passive optical device with functions of distributing downlink optical signals and collecting uplink optical signals, namely distributing optical signals from uplink optical interfaces to all downlink optical interfaces for transmission and collecting optical signals from the downlink optical interfaces to the uplink optical interfaces for transmission.

Optical splitter input port: an uplink optical interface of the optical splitter, which collects and transmits the optical signals and is also called an optical splitter input port tail fiber. There may be multiple input ports (usually used as standby ports) on an optical splitter, and the multiple input ports are identified and distinguished with different serial numbers.

Optical splitter output port: a downlink optical interface of the optical splitter, which distributes and transmits the optical signals and is also called an optical splitter output port tail fiber. There usually may be multiple output ports on an optical splitter, and the multiple output ports are identified and distinguished with different serial numbers.

Guide port of the optical fiber: a device port which has been plugged into an optical fiber tail fiber, wherein an optical splitter to be constructed is determined according to an optical splitter tail fiber plugged into the port, and the device port is called a guide port of the optical splitter and is called a guide port for short in the present disclosure.

Hop connection: referring to plugging a tag head of an optical fiber or an optical splitter into the device port to communicate an optical path to meet a requirement for opening a service.

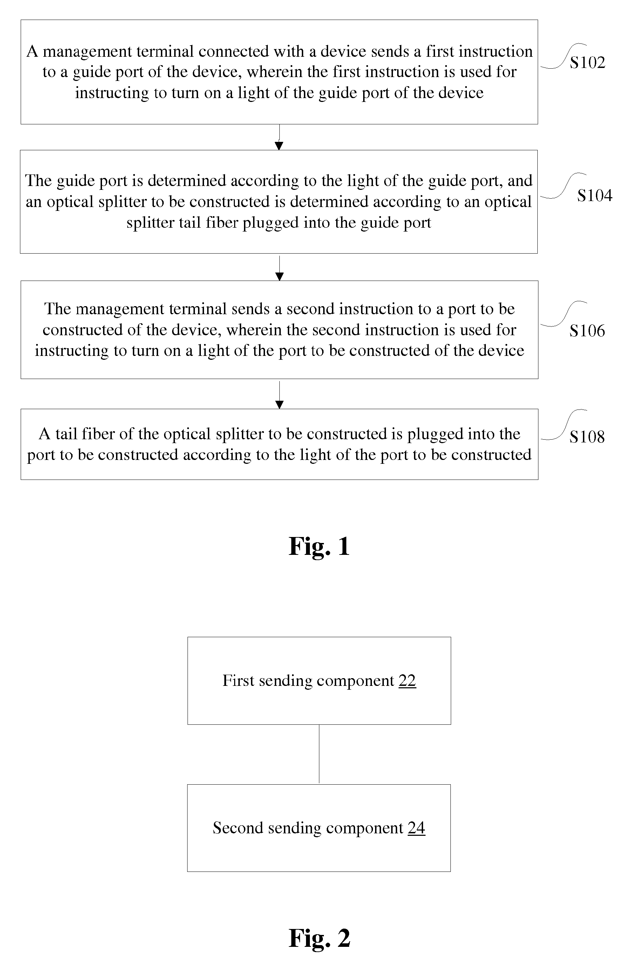

A method for constructing an optical splitter is provided in the embodiment, Fig. 1 is a flowchart of a method for constructing an optical splitter according to an embodiment of the present disclosure, and as shown in Fig. 1, the flow includes the following steps:
Step 102: a management terminal connected with a device sends a first instruction to a guide port of the device, wherein the first instruction is used for instructing to turn on a light of the guide port of the device;
Step 104: the guide port is determined according to the light of the guide port, and an optical splitter to be constructed is determined according to an optical splitter tail fiber plugged into the guide port;
Step 106: the management terminal sends a second instruction to a port to be constructed of the device, wherein the second instruction is used for instructing to turn on a light of the port to be constructed of the device; and
Step 108: a tail fiber of the optical splitter to be constructed is plugged into the port to be constructed according to the light of the port to be constructed.

By the steps, a constructor is not required to look for corresponding optical splitter one by one, and instead, the guide port is indicated by turning on the light, the optical splitter to be constructed is determined according to the plugged optical splitter tail fiber. The light of the port to be constructed is instructed to be turned on and the tail fiber of the optical splitter to be constructed is plugged into the port to be constructed, so that the problem that the constructor cannot rapidly determine the optical splitter to be constructed in a process of constructing multiple optical splitters in the related art is solved, rapid identification and installation of the optical splitters is implemented and a speed of the construction is increased.

In the embodiment, the management terminal may obtain the guide port in multiple manners. For example, the management terminal may send the first instruction to the guide port of the device according to a guide port indicated in optical splitter work order information, wherein the guide port indicated in the optical splitter work order information is determined by a network management system. For another example, the management terminal may also send the first instruction to the guide port of the device according to a calculated guide port, wherein the calculated guide port is determined by the device or the management terminal according to an ID of the optical splitter to be constructed, wherein the ID is carried in an optical splitter work order.

Optionally, a principle for preferably determining the guide port is further provided in the embodiment: a device port into which an optical splitter input port with a smaller serial number is plugged is preferably selected as the guide port, and then a device port into which an optical splitter output port with a smaller serial number is plugged is selected.

Optionally, a checking manner may further be provided in the embodiment, and the management terminal may judge whether an ID of the optical splitter plugged into the guide port and an ID of the optical splitter plugged into the port to be constructed are consistent or not, determine that a construction result is correct when a judgment result is that the ID of the optical splitter plugged into the guide port and the ID of the optical splitter plugged into the port to be constructed are consistent, and determine that a wrong optical splitter is used when the judgment result is that the ID of the optical splitter plugged into the guide port and the ID of the optical splitter plugged into the port to be constructed are not consistent.

In the embodiment, the management terminal may further preferably check a resource configuration condition of the device before the management terminal sends the first instruction to the guide port of the device.

A management terminal is further provided in the embodiment, which is configured to implement the abovementioned method, and what has been described in the abovementioned embodiment and preferred implementation mode will not be elaborate herein.

It is important to note that names of components in the device are not intended to form practical limits to the components, for example, a first sending component may be described as "a component configured to send a first instruction to a guide port of a device connected with the management terminal", all of the following components may be implemented in a processor, and for example, the first sending component may be described as "a processor, configured to send a first instruction to a guide port of a device connected with the management terminal", or, "a processor, including a first sending component" and the like.

Fig. 2 is a first structure block diagram of a management terminal according to an embodiment of the present disclosure, and as shown in Fig. 2, the device includes: a first sending component 22 and a second sending component 24. The device will be described below.

The first sending component 22 is configured to send a first instruction to a guide port of a device connected with the management terminal, wherein the first instruction is used for instructing to turn on a light of the guide port of the device; and
the second sending component 24 is configured to send a second instruction to a port to be constructed of the device, wherein the second instruction is used for instructing to turn on a light of the port to be constructed of the device.

By the device, a constructor is not required to look for corresponding optical splitters one by one, and instead, the guide port is indicated by turning on the light, and the optical splitter to be constructed is determined according to the plugged optical splitter tail fiber. The light of the port to be constructed is instructed to be turned on and the tail fiber of the optical splitter to be constructed is plugged into the port to be constructed, so that the problem that the constructor cannot rapidly determine the optical splitter to be constructed in a process of constructing multiple optical splitters in the related art is solved, rapid identification and mounting of the optical splitters is implemented and a construction speed is increased.

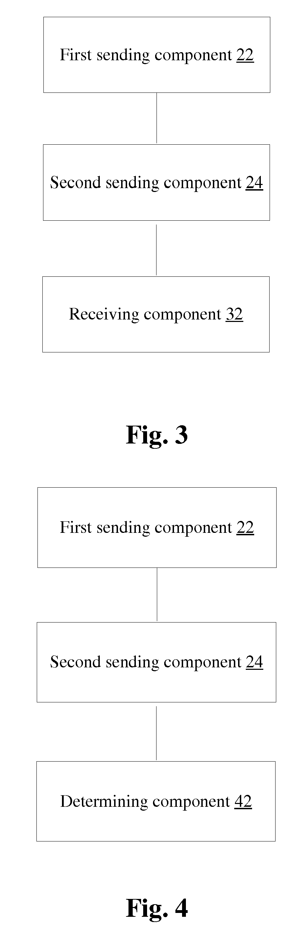

Fig. 3 is a second structure block diagram of a management terminal according to an embodiment of the present disclosure, and as shown in Fig. 3, the device includes: the first sending component 22, the second sending component 24 and a receiving component 32. The device will be described below.

The receiving component 32 is configured to receive optical splitter work order information from a network management system, or receive the guide port determined by the device according to an ID of an optical splitter to be constructed in an optical splitter work order; and
at this moment, the first sending component 22 is configured to send the first instruction to the guide port of the device according to a guide port carried in the optical splitter work order information or the guide port determined by the device.

Fig. 4 is a third structure block diagram of a management terminal according to an embodiment of the present disclosure, and as shown in Fig. 4, the device includes: the first sending component 22, the second sending component 24 and a determining component 42. The device will be described below.

The determining component 42 is configured to determine the guide port according to the ID of the optical splitter to be constructed in the optical splitter work order; and
at this moment, the first sending component 22 is configured to send the first instruction to the guide port of the device according to the guide port determined by the determining component.

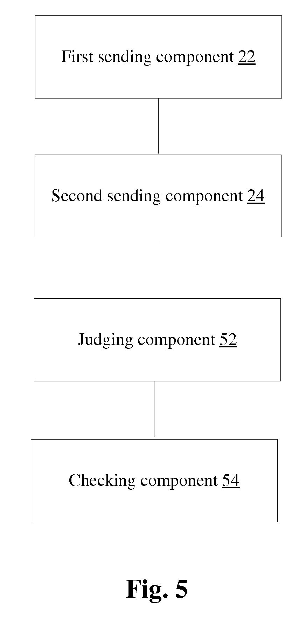

Fig. 5 is a fourth structure block diagram of a management terminal according to an embodiment of the present disclosure, and as shown in Fig. 5, the device includes: the first sending component 22, the second sending component 24, a judging component 52 and a checking component 54. The device will be described below.

The judging component 52 is configured to judge whether an ID of the optical splitter plugged into the guide port and an ID of the optical splitter plugged into the port to be constructed are consistent or not, determine that a construction result is correct when a judgment result is that the ID of the optical splitter plugged into the guide port and the ID of the optical splitter plugged into the port to be constructed are consistent, and determining that a wrong optical splitter is used when the judgment result is that the ID of the optical splitter plugged into the guide port and the ID of the optical splitter plugged into the port to be constructed are not consistent.

The checking component 54 is configured to check a resource configuration condition of the device.

The abovementioned example embodiment and example implementation mode will be described below with reference to a below example embodiment.

The example embodiment provides a method for intelligently guiding construction according an optical splitter work order, wherein a network management system creates the optical splitter work order. A new optical splitter is constructed without a guide port when the new optical splitter is used for the first time, and when an optical splitter is not used for the first time, a guide port of the optical splitter is required to be calculated, and the optical splitter to be constructed is determined at a construction site according to the guide port of the optical splitter, wherein the guide port is used for identifying the optical splitter to be constructed.

Two example manners may be adopted for calculating the guide port of the optical fiber.

Manner 1: the network management system calculates the guide port of the optical splitter, and sets the calculated guide port into optical splitter work order information.

Manner 2: there is no guide port included in the optical splitter work order information, but an ID of the optical splitter to be constructed is set in the optical splitter work order information. At the construction site, the management terminal or a device to be constructed calculates the guide port according to the ID of the optical splitter to be constructed.

The network management system distributes the optical splitter work order to a management terminal, the management terminal displays detailed information of the optical splitter work order, and the constructor reaches the construction site with taking along the management terminal and a construction material.

Construction is started after the management terminal is connected with the device, a resource configuration condition of the device is checked at first, including checking whether an ID of the device is correct or not, whether the guide port is normal or not, whether a port to be constructed is normal or not and the like.

When the guide port exists in the work order, the management terminal sends a instruction used for turning on a light to the guide port of the device to indicate to turn on a Light Emitting Diode (LED) light of the guide port; and when there is no guide port in the work order, the management terminal or the device to be constructed calculates the guide port and turns on the LED light at the guide port. The constructor determines the optical splitter to be constructed according to an optical splitter tail fiber plugged into the guide port at which the light is turned on.

The management terminal indicates the port to be constructed in the work order, and the constructor implements construction by using the optical splitter tail fiber.

The management terminal detects a construction result, reads whether the ID of the optical splitter plugged on the guide port and the ID of the optical splitter plugged on the port to be constructed are consistent or not, determines that construction is correct when a the ID of the optical splitter plugged on the guide port and the ID of the optical splitter plugged on the port to be constructed are consistent, and when a the ID of the optical splitter plugged on the guide port and the ID of the optical splitter plugged on the port to be constructed are not consistent, determines that a wrong optical splitter is used, a failure of opening a service may occur and checking and correction are required.

The management terminal reports implementation result information of constructing the work order to the network management system to implement an optical splitter work order construction flow.

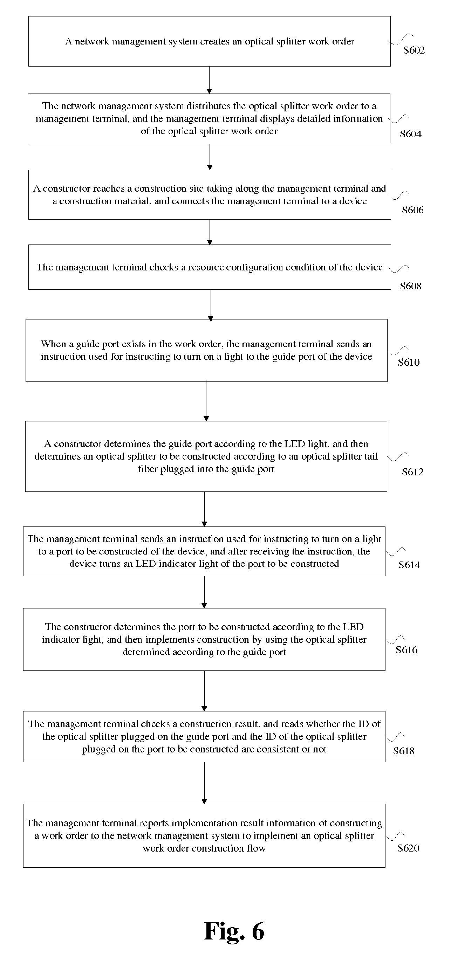

Fig. 6 is a flowchart of a method for intelligently guiding construction according to an optical splitter work order according to an example embodiment of the present disclosure, and as shown in Fig. 6, the flow includes the following steps.

Step 602: a network management system creates an optical splitter work order. A new optical splitter is adopted for construction without a guide port when the new optical splitter is used for the first time, and when an optical splitter is not used for the first time, a guide port of the optical splitter is required to be calculated, and the optical splitter to be constructed is determined at a construction site according to the guide port of the optical splitter, wherein the guide port is used for identifying the optical splitter to be constructed.

Two example manners may be adopted for calculating the guide port of the optical fiber.

Manner 1: the network management system calculates the guide port of the optical splitter, and sets the guide port in optical splitter work order information.

Manner 2: there is no guide port included in the optical splitter work order information, but an ID of the optical splitter to be constructed is set in the optical splitter work order information. At the construction site, the management terminal or a device to be constructed calculates the guide port according to the ID of the optical splitter to be constructed.

Step 604: the network management system distributes the optical splitter work order to a management terminal, and the management terminal displays detailed information of the optical splitter work order.

Step 606: the constructor reaches the construction site with taking along the management terminal and a construction material, and connects the management terminal to the device.

Step 608: the management terminal checks a resource configuration condition of the device at first, including, but not limited to, checking whether an ID of the device is correct or not, whether the guide port is normal or not, whether a port to be constructed is normal or not and the like.

Step 610: when the guide port exists in the work order, the management terminal sends a instruction for instructing to turn on a light to the guide port of the device to instruct to turn on an LED light of the guide port; and when there is no guide port in the work order, the management terminal or the device to be constructed calculates the guide port and turns on the LED light of the guide port.

Step 612: the constructor determines the guide port according to the LED lamp, and then determines the optical splitter to be constructed according to an optical splitter tail fiber plugged into the guide port.

Step 614: the management terminal sends an instruction for instructing to turn on a light to the port to be constructed of the device, and after receiving the instruction, the device turns on an LED indicator light of the port to be constructed.

Step 616: the constructor determines the port to be constructed according to the LED indicator light, and then implements construction on the optical splitter determined according to the guide port, namely plugging a tail fiber of the optical splitter to be constructed determined in Step 612 into the port to be constructed.

Step 618: the management terminal checks a construction result, reads whether the ID of the optical splitter plugged on the guide port and the ID of the optical splitter on the port to be constructed are consistent or not, determines that construction is correct when the ID of the optical splitter plugged on the guide port and the ID of the optical splitter on the port to be constructed are consistent, and when the ID of the optical splitter plugged on the guide port and the ID of the optical splitter on the port to be constructed are not consistent, determines that a wrong optical splitter is used, a failure of opening a service may occur and checking and correction are required.

Step 620: the management terminal reports an implementation result of work order construction information to the network management system, so far a flow of constructing according to an optical splitter work order is implemented.

By the steps, the guide port of the optical splitter to be constructed is calculated, the optical splitter is rapidly and accurately found at the construction site according to the guide port, and the optical splitter is constructed according to a work order. According to the method, the whole flow of constructing an optical splitter is implemented in a guide manner, and particularly, the optical splitter to be constructed is rapidly and accurately determined according to the guide port, so that the problem of difficulty in positioning the optical splitter to be constructed at the construction site is effectively solved, a construction speed is increased, accuracy is improved, construction time is reduced and construction cost is lowered. In addition, the problems of high damage rate of paper labels, increase of a possibility of occurrence of an error and low accuracy caused by dependence on manual work and low efficiency of a method for traversing and reading all optical splitter IDs are solved.

The present disclosure will be described below with reference to application scenes in detail.

In an FTTH scene successfully deployed by a network management system, Device1 exists in a network and Device1 has been added into the network management system. Device1 is an intelligent ODF device, and has totally 1,536 ports, and there are three used optical splitters, i.e. Splitter1 (with an ID SID1), Splitter2 (with an ID SID2) and Splitter3 (with an ID SID3) respectively, wherein a splitting ratio of Splitter1 is 1:8, an input port tail fiber has been used, 3 output port tail fibers have been used and 5 output port tail fibers are idle; a splitting ratio of Splitter2 is 2:16, all input port tail fibers have been used, 10 output port tail fibers have been used and 6 output port tail fibers are idle; and a splitting ratio of Splitter3 is 2:16, one input port tail fiber has been used and is plugged into port Rack1-Shelf1-Slot3-Port1 (port 1 of single board 3 of frame 1 of rack 1), there is one input port tail fiber left idle, 12 output port tail fibers have been used and 4 output port tail fibers are idle. There has existed resource configuration information and service conditions of the device and the optical splitters in the network management system.

The network management system calculates a guide port of an optical splitter: in order to meet a requirement of opening a certain service, the network management system plans to connect an output port tail fiber of Splitter3 to port Rack1-Shelf1-Slot3-Port1 (port 1 of single board 3 of frame 1 of rack 1) of Device1 in a hop connection manner.

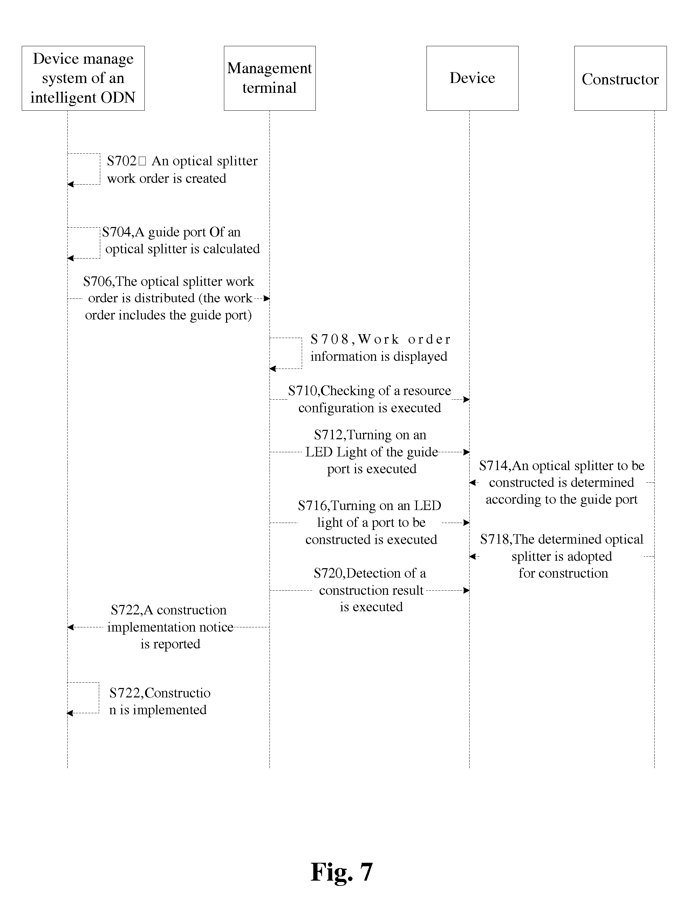

Fig. 7 is a flowchart of guide port calculation of a network management system according to an example embodiment of the present disclosure, and as shown in Fig. 7, the flow includes the following steps.

Step 702: a network management system creates Order1 for Splitter3, and plans to connect an idle output port tail fiber of Splitter3 to port Rack1-Shelf1-Slot3-Port1 (port 1 of single board 3 of frame 1 of rack 1) of Device1 in a hop connection manner.

Step 704: a guide port of the optical splitter is required to be calculated because Splitter3 is not used for the first time.

9 (one input and 8 output) ports of Device1 have been used for plugging by Splitter3, all of the 9 ports may be adopted as the guide port, and one port is determined as the guide port according to a principle as follows: the device port into which an optical splitter input port with a smaller serial number is plugged is preferably selected as the guide port, and then the device port into which an optical splitter output port with a smaller serial number is selected as the guide port.

According to the principle, Rack1-Shelf1-Slot3-Port1 is determined as the guide port, and the guide port is set in the optical splitter work order to finish creating Order1.

Step 706: the network management system distributes Order1 to a management terminal, and the management terminal receives and displays the optical splitter work order.

Step 708: a constructor reaches a construction site taking along a construction material according to an information indication of Order1 displayed by the management terminal, and connects the management terminal to the device.

Step 710: the management terminal checks a resource configuration condition of the device at first, including, but not limited to, checking whether an ID of the device is correct or not, whether the guide port is normal or not, whether a port to be constructed is normal or not and the like.

Step 712: the management terminal sends an instruction for instructing to turn on a light to the guide port Rack1-Shelf1-Slot3-Port1 of Device1, and after receiving the instruction, the device turns on an LED indicator light at Rack1-Shelf1-Slot3-Port1.

Step 714: the constructor determines Splitter3 to which the optical splitter tail fiber plugged to the guide port Rack1-Shelf1-Slot3-Port1 belongs to be an optical splitter to be constructed according to the indicator light of the port.

Step 716: the management terminal sends an instruction used for instructing to turn on a light to a port to be constructed Rack1-Shelf2-Slot1-Port1 of the device, and after receiving the instruction, the device turns on an LED indicator light of the port to be constructed Rack1-Shelf2-Slot1-Port1.

Step 718: because an output port tail fiber is required to be adopted for construction according to the work order, any one of 4 idle output port tail fibers of Splitter3 is selected and plugged into the port to be constructed Rack1-Shelf2-Slot1-Port1.

Step 720: the management terminal checks a construction result, reads ID1 of an optical splitter plugged to the guide port Rack1-Shelf1-Slot3-Port1 and ID2 of an optical splitter plugged to the port to be constructed Rack1-Shelf2-Slot1-Port1 respectively, compares whether ID1 is consistent with ID2 or not, determines that construction is correct when ID1 is consistent with ID2, and when ID1 is not consistent with ID2, determines that a wrong optical fiber is used, a failure of opening a service may occur and immediate checking and correction is required.

Step 722: the management terminal reports a construction result of Order1 to the network management system to implement construction of the optical splitter work order.

The device to be constructed calculates the guide port of the optical splitter: in order to meet a requirement of opening a certain service, the network management system plans to connect an output port tail fiber of Splitter3 to port Rack1-Shelf2-Slot1-Port2 (port 2 of single board 1 of frame 2 of rack 1) of Device1 in a hop connection manner.

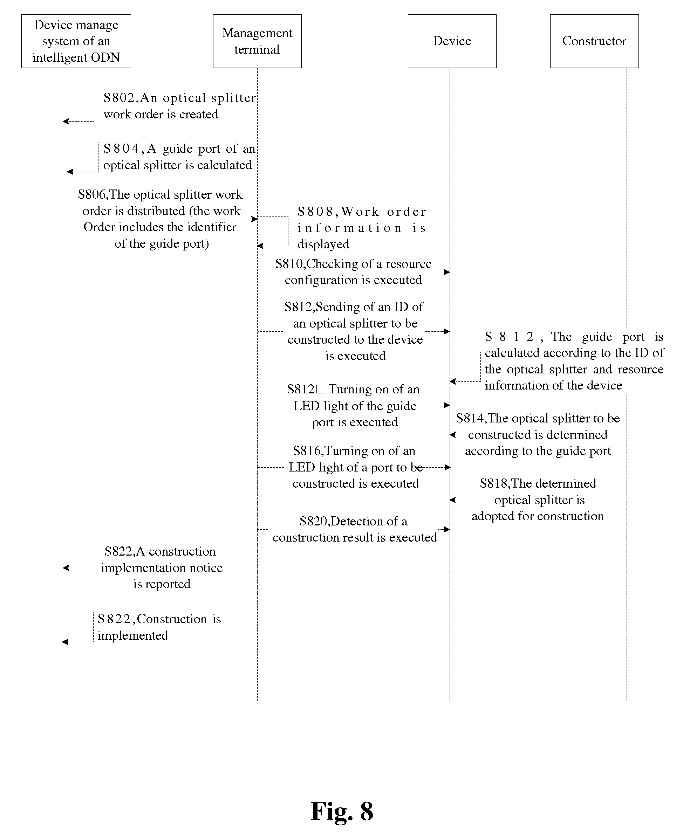

Fig. 8 is a flowchart of guide port calculation of a device to be constructed according to an example embodiment of the present disclosure, and as shown in Fig. 8, the flow includes the following steps.

Step 802: a network management system creates Order2 for Splitter3, and plans to connect an idle output port tail fiber of Splitter3 to port Rack1-Shelf2-Slot1-Port2 (port 2 of single board 1 of frame 2 of rack 1) of Device1 in a hop connection manner.

Step 804: a guide port of the optical splitter Splitter3 to be constructed is required to be calculated by the device at a construction site because Splitter3 is not used for the first time, and then SID3 of the optical splitter Splitter3 to be constructed is set in the optical splitter work order to finish creation of the optical splitter work order Order2.

Step 806: the network management system distributes Order2 to a management terminal, and the management terminal receives and displays the optical splitter work order.

Step 808: a constructor reaches the construction site taking along a construction material according to an information indication of Order2 displayed by the management terminal, and connects the management terminal to the device.

Step 810: the management terminal checks a resource configuration condition of the device at first, including, but not limited to, checking whether an ID of the device is correct or not, whether the guide port is normal or not, whether a port to be constructed is normal or not and the like.

Step 812: the management terminal notifies Device1 to calculate the guide port. The management terminal sends SID3 of the optical splitter to be constructed to Device 1, and Device1 scans to discover that 9 (one input and 8 output) ports have been used for plugging by the optical splitter identified with the ID SID3 and all of the 9 ports may be adopted as the guide port, and determines one port as the guide port according to a principle as follows: the device port into which an optical splitter input port with a smaller serial number is plugged is preferably selected as the guide port, and then the device port into which an optical splitter output port with a smaller serial number is selected as the guide port; and according to the principle, Rack1-Shelf1-Slot3-Port1 is determined as the guide port, and an LED light of the guide port is turned on.

Step 814: the constructor determines that the optical splitter to which the optical splitter tail fiber plugged to the guide port Rack1-Shelf1-Slot3-Port1 belongs is the optical splitter Splitter3 to be constructed according to the indicator light.

Step 816: the management terminal sends an instruction used for instructing to turn on a light to a port to be constructed Rack1-Shelf2-Slot1-Port2 of the device, and after receiving the instruction, the device turns on an LED indicator light of the port to be constructed Rack1-Shelf2-Slot1-Port2.

Step 818: because an output port tail fiber is required to be adopted for construction according to the work order, any one of idle output port tail fibers of Splitter3 is selected and plugged into the port to be constructed Rack1-Shelf2-Slot1-Port2.

Step 820: the management terminal checks a construction result, reads an ID of the optical splitter plugged to the guide port Rack1-Shelf1-Slot3-Port1 and an ID of the optical splitter plugged to the port to be constructed Rack1-Shelf2-Slot1-Port2 respectively, compares whether the ID of the optical splitter plugged to the guide port Rack1-Shelf1-Slot3-Port1 and the ID of the optical splitter plugged to the port to be constructed Rack1-Shelf2-Slot1-Port2 are consistent or not, determines that construction is correct when the ID of the optical splitter plugged to the guide port Rack1-Shelf1-Slot3-Port1 and the ID of the optical splitter plugged to the port to be constructed Rack1-Shelf2-Slot1-Port2 are consistent, and when the ID of the optical splitter plugged to the guide port Rack1-Shelf1-Slot3-Port1 and the ID of the optical splitter plugged to the port to be constructed Rack1-Shelf2-Slot1-Port2 are not consistent, determines that a wrong optical fiber is used, a failure of opening a service may occur and immediate checking and correction is required.

Step 822: the management terminal reports a construction result of Order2 to the network management system to implement construction of the optical splitter work order.

The management terminal calculates the guide port of the optical splitter: in order to meet a requirement of opening a certain service, the network management system may plans to connect an output port tail fiber of Splitter3 to port Rack1-Shelf2-Slot1-Port3 (port 3 of single board 1 of frame 2 of rack 1) of Device1 in the hop connection manner.

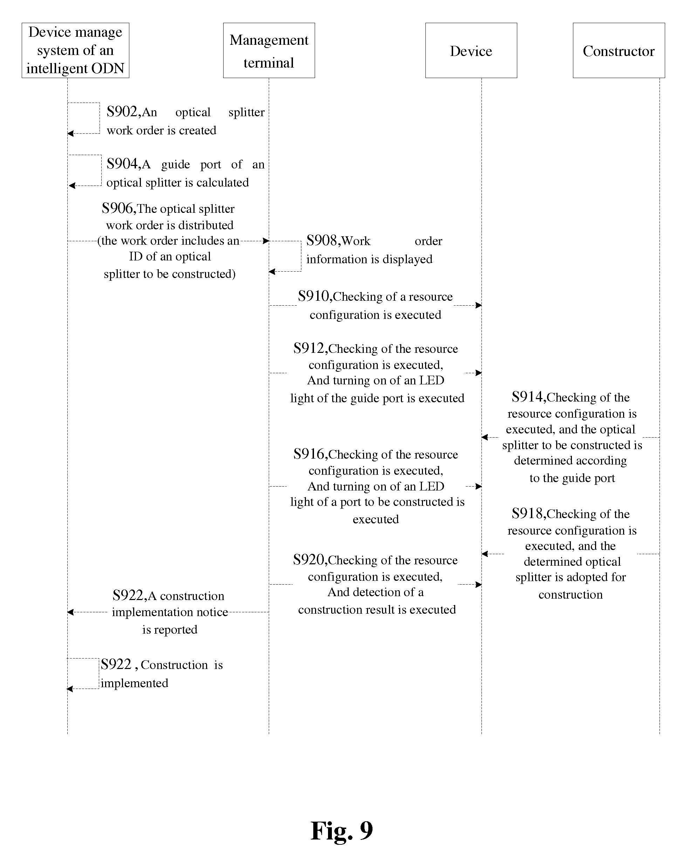

Fig. 9 is a flowchart of guide port calculation of a management terminal according to an example embodiment of the present disclosure, and as shown in Fig. 9, the flow includes the following steps.

Step 902: a network management system creates Order3 for Splitter3, and plans to connect an idle output port tail fiber of Splitter3 to port Rack1-Shelf2-Slot1-Port3 (port 3 of single board 1 of frame 2 of rack 1) of Device1 in a hop connection manner.

Step 904: a guide port of the optical splitter Splitter3 to be constructed is required to be calculated by the management terminal at a construction site because Splitter3 is not used for the first time, and then SID3 of the optical splitter Splitter3 to be constructed is set in the optical splitter work order to finish creation of the optical splitter work order Order 3.

Step 906: the network management system distributes Order3 to a management terminal, and the management terminal receives and displays the optical splitter work order.

Step 908: a constructor reaches the construction site taking along a construction material according to an information indication of Order3 displayed by the management terminal, and connects the management terminal to the device.

Step 910: the management terminal checks a resource configuration condition of the device at first, including, but not limited to, checking whether an ID of the device is correct or not, whether a port to be constructed is normal or not and the like.

Step 912: the management terminal calculates the guide port. The management terminal reads resource information of Device1, performs comparison to discover that 9 (one input and 8 output) ports of Device1 have been used for plugging by Splitter3 and all of the 9 ports may be adopted as the guide port, and determines one port as the guide port according to a principle as follows: the device port into which an optical splitter input port with a smaller serial number is plugged is preferably selected as the guide port, and then the device port into which an optical splitter output port with a smaller serial number is selected as the guide port; and according to the principle, Rack1-Shelf1-Slot3-Port1 is determined as the guide port, and an LED light of the guide port is turned on.

Step 914: the constructor determines that the optical splitter to which the optical splitter tail fiber plugged to the guide port Rack1-Shelf1-Slot3-Port1 belongs is the optical splitter Splitter3 to be constructed according to the indicator light.

Step 916: the management terminal sends an instruction for instructing to turn on a light to a port to be constructed Rack1-Shelf2-Slot1-Port3 of the device, and after receiving the instruction, the device turns on an LED indicator light of the port Rack1-Shelf2-Slot1-Port3 to be constructed.

Step 918: because an output port tail fiber is required to be adopted for construction according to the work order, any one of idle output port tail fibers of Splitter3 is selected and plugged into the port Rack1-Shelf2-Slot1-Port3 to be constructed.

Step 920: the management terminal checks a construction result, reads an ID of the optical splitter plugged to the guide port Rack1-Shelf1-Slot3-Port1 and an ID of the optical splitter plugged to the port Rack1-Shelf2-Slot1-Port3 to be constructed respectively, compares whether the ID of the optical splitter plugged to the guide port Rack1-Shelf1-Slot3-Port1 and the ID of the optical splitter plugged to the port Rack1-Shelf2-Slot1-Port3 to be constructed are consistent or not, determines that construction is correct when the ID of the optical splitter plugged to the guide port Rack1-Shelf1-Slot3-Port1 and the ID of the optical splitter plugged to the port Rack1-Shelf2-Slot1-Port3 to be constructed are consistent, and when the ID of the optical splitter plugged to the guide port Rack1-Shelf1-Slot3-Port1 and the ID of the optical splitter plugged to the port Rack1-Shelf2-Slot1-Port3 to be constructed are not consistent, determines that a wrong optical fiber is used, a failure of opening a service may occur and immediate checking and correction is required.

Step 922: the management terminal reports a construction result of Order3 to the network management system to implement construction of the optical splitter work order.

### Industrial Applicability

According to the embodiment of the present disclosure, a management terminal connected with a device sends a first instruction to a guide port of the device, wherein the first instruction is used for instructing to turn on a light of the guide port of the device; the guide port is determined according to the light of the guide port, and the optical splitter to be constructed is determined according to the optical splitter tail fiber plugged into the guide port; the management terminal sends a second instruction to a port to be constructed of the device, wherein the second instruction is used for instructing to turn on a light of the port to be constructed of the device; and the tail fiber of the optical splitter to be constructed is plugged into the port to be constructed according to the light of the port to be constructed, so that the problem that the constructor cannot rapidly determine the optical splitter for construction in the process of constructing the multiple optical splitters in the related art is solved, rapid identification and installation of the optical splitters is implemented and a construction speed is increased.

Obviously, those skilled in the art should know that each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, or may form each integrated circuit component respectively, or multiple components or steps therein may form a single integrated circuit component for implementation. As a consequence, the present disclosure is not limited to any specific hardware and software combination.

The above is only the preferred embodiment of the present disclosure and not intended to limit the present disclosure, and for those skilled in the art, the present disclosure may have various modifications and variations. Any modifications, equivalent replacements, improvements and the like within the spirit and principle of the present disclosure shall fall within the scope of protection of the present disclosure.

## Claims

1. A method for constructing an optical splitter, comprising:
sending, by a management terminal connected with a device, a first instruction to a guide port of the device, wherein the first instruction is used for instructing to turn on a light of the guide port of the device;
determining the guide port according to the light of the guide port, and determining an optical splitter to be constructed according to an optical splitter tail fiber plugged into the guide port;
sending, by the management terminal, a second instruction to a port to be constructed of the device, wherein the second instruction is used for instructing to turn on a light of the port to be constructed of the device; and
plugging a tail fiber of the optical splitter to be constructed into the port to be constructed according to the light of the port to be constructed.

2. The method as claimed in claim 1, wherein sending, by the management terminal, the first instruction to the guide port of the device comprises:
sending, by the management terminal, the first instruction to the guide port of the device according to a guide port indicated in optical splitter work order information, wherein the guide port indicated in the optical splitter work order information is determined by a network management system; and
sending, by the management terminal, the first instruction to the guide port of the device according to a calculated guide port, wherein the calculated guide port is determined by the device or the management terminal according to an Identifier, ID, of the optical splitter to be constructed, the ID is carried in an optical splitter work order.

3. The method as claimed in claim 2, wherein the guide port is determined according to a principle as follows:
a device port into which an optical splitter input port with a smaller serial number is plugged is preferably selected as the guide port, and then a device port into which an optical splitter output port with a smaller serial number is plugged is selected.

4. The method as claimed in any one of claims 1 to 3, further comprising:
judging, by the management terminal, whether an ID of the optical splitter plugged into the guide port and an ID of the optical splitter plugged into the port to be constructed are consistent or not, determining that a construction result is correct when a judgment result is that the ID of the optical splitter plugged into the guide port and the ID of the optical splitter plugged into the port to be constructed are consistent, and determining that a wrong optical splitter is used when the judgment result is that the ID of the optical splitter plugged into the guide port and the ID of the optical splitter plugged into the port to be constructed are not consistent.

5. The method as claimed in any one of claims 1 to 3, before sending, by the management terminal, the first instruction to the guide port of the device, further comprising:
checking, by the management terminal, a resource configuration condition of the device.

6. A management terminal, comprising:
a first sending component, configured to send a first instruction to a guide port of a device connected with the management terminal, wherein the first instruction is used for instructing to turn on a light of the guide port of the device; and
a second sending component, configured to send a second instruction to a port to be constructed of the device, wherein the second instruction is used for instructing to turn on a light of the port to be constructed of the device.

7. The management terminal as claimed in claim 6,
the management terminal further comprising: a receiving component, configured to receive optical splitter work order information from a network management system, or receive the guide port determined by the device according to an Identifier, ID, of an optical splitter to be constructed in an optical splitter work order, wherein
the first sending component is configured to send the first instruction to the guide port of the device according to a guide port carried in the optical splitter work order information or the guide port determined by the device.

8. The management terminal as claimed in claim 6,
the management terminal further comprising: a determining component, configured to determine the guide port according to an ID of the optical splitter to be constructed in an optical splitter work order, wherein
the first sending component is configured to send the first instruction to the guide port of the device according to the guide port determined by the determining component.

9. The management terminal as claimed in claim 7 or 8, wherein the guide port is determined according to a principle as follows:
a device port into which an optical splitter input port with a smaller serial number is plugged is preferably selected as the guide port, and then a device port into which an optical splitter output port with a smaller serial number is plugged is selected.

10. The management terminal as claimed in any one of claims 6 to 9, further comprising:
a judging component, configured to judge whether an ID of the optical splitter plugged into the guide port and an ID of the optical splitter plugged into the port to be constructed are consistent or not, determine that a construction result is correct when a judgment result is that the ID of the optical splitter plugged into the guide port and the ID of the optical splitter plugged into the port to be constructed are consistent, and determining that a wrong optical splitter is used when the judgment result is that the ID of the optical splitter plugged into the guide port and the ID of the optical splitter plugged into the port to be constructed are not consistent.

11. The management terminal as claimed in any one of claims 6 to 9, further comprising:
a checking component, configured to check a resource configuration condition of the device.
